# FASCICULE DE BREVET EUROPEEN

(11) **EP 3 623 230 B1**
(45) Date de publication et mention de la délivrance du brevet: **02.11.2022**
(21) Numéro de dépôt: 19196311.5
(22) Date de dépôt: 10.09.2019
(51) Int. Cl.: B60R 21/213

(54) **VÉHICULE DOTÉ D'UN AIRBAG RIDEAU AMÉLIORÉ**
FAHRZEUG MIT VERBESSERTEM VORHANG-AIRBAG
VEHICLE WITH IMPROVED CURTAIN AIRBAG

(30) Priorité: 11.09.2018 FR 1858121
(43) Date de publication de la demande: 18.03.2020
(73) Titulaire: Renault s.a.s, 92100 Boulogne Billancourt (FR)
(72) Inventeur: BOUILLON, JEAN-CHARLES, 78940 LA QUEUE LEZ YVELINES (FR); DUBOIS, Nicolas, 91340 OLLAINVILLE (FR)
(74) Mandataire: Renault Group

(56) Documents cités:
- EP-A1- 2 230 136
- US-A1- 2006 061 069

## Description

L'invention se rapporte à un véhicule doté d'un airbag (AB) rideau amélioré.

Un airbag rideau se situe généralement au niveau d'une zone latérale intérieure du véhicule, appelées aussi zone brancard. Un tel airbag est généralement en tissu, et est replié sous un panneau délimitant l'habitacle du véhicule. Cet airbag est associé à un dispositif de gonflage pouvant par exemple être de type pyrotechnique.

Lors d'un choc accidentel significatif du véhicule contre un obstacle extérieur, un capteur de choc ayant un temps de réaction très court, transmet un signal à l'airbag, déclenchant aussitôt le dispositif de gonflage. L'airbag se retrouve ainsi gonflé juste avant qu'une partie du corps d'un occupant du véhicule ne soit brutalement déplacée et ne vienne impacter un élément de structure du véhicule délimitant l'habitacle. L'airbag est ainsi destiné à s'interposer entre un occupant du véhicule et l'élément de structure fixe, afin d'éviter un impact direct dudit occupant contre ledit élément de structure, qui pourrait provoquer de graves blessures. Cet airbag augmente ainsi la sécurité des occupants du véhicule lors d'un choc accidentel du véhicule contre un obstacle extérieur, en limitant voire en évitant les blessures graves.

Il est donc important qu'aucune accroche ou obstacle ne gêne son déploiement et l'empêche de se gonfler complétement et donc de jouer efficacement son rôle de rempart de protection vis-à-vis des occupants du véhicule.

Les solutions utilisées actuellement pour éviter ce type d'événement malencontreux, impliquent l'utilisation de pièces lourdes et encombrantes entre l'airbag et l'ébénisterie du pied milieu, ou la mise en œuvre de procédés de montage dudit airbag qui sont compliqués à réaliser, en raison de la difficulté d'accès à cette zone spécifique du véhicule où est implanté l'airbag. Le document US 2006/061069 décrit un procédé de montage d'un airbag rideau sur une structure intérieur d'un véhicule selon le préambule de la revendication 1 et un véhicule comprenant un airbag rideau solidarisé à une structure l'intérieure dudit véhicule selon le préambule de la revendication 7.

Un véhicule selon l'invention possède au moins un airbag rideau ayant une fixation simplifiée et permettant un déploiement sûr et fiable dudit airbag en cas de choc.

L'invention a pour objet un procédé de montage d'un airbag rideau sur une structure d'une zone latérale et intérieure d'un véhicule, ledit airbag étant destiné à être placé au-dessus d'un pied de carrosserie dudit véhicule.

Selon l'invention, le procédé de montage comprend les étapes de la revendication 1.

Le principe d'un tel procédé est de mettre en œuvre une pièce support dotée d'au moins un volet, qui est apte à se déplacer sous l'effet d'une poussée du pavillon lors du montage dudit pavillon dans le véhicule et qui est apte à venir recouvrir une zone particulière de la garniture de pied supérieure pour jouer le rôle d'une piste de déploiement pour l'airbag lors du gonflage de celui-ci provoqué par un choc du véhicule. Préférentiellement, le volet est une pièce légère et peu encombrante, qui n'aura aucune influence néfaste sur le montage de l'airbag dans le véhicule. Lorsque le volet va recouvrir la garniture de pied au-dessus duquel est monté l'airbag, il va plus exactement recouvrir une ouverture réalisée entre ledit pied et la carrosserie du véhicule de manière à empêcher l'airbag en cours de déploiement, de venir se coincer dans ladite ouverture. Le volet peut indifféremment se déplacer par rotation ou par coulissement. De façon avantageuse, la pièce support s'étend selon une direction longitudinale du véhicule le long de la face de déviation de la rampe. Il est à préciser que lorsque le volet enserre l'airbag, cela signifie qu'il s'est déplacé en direction de l'airbag replié, en venant au contact dudit airbag et en exerçant ou non une pression sur cet airbag.

Avantageusement, l'étape de fixation du volet sur la rampe support est réalisée de façon articulée de manière à permettre audit volet de se déplacer par pivotement. De cette manière, le volet n'a pas besoin d'un espace de dégagement volumineux lorsqu'il se déplace pour venir enserrer l'airbag. Ce montage articulé peut être réalisé par exemple au moyen d'un axe de rotation, d'une charnière ou grâce à la présence d'au moins une patte profilée engagée dans au moins un logement prévu de la rampe de l'airbag. Préférentiellement, le volet pivote dans un sens parallèle à la longueur du sac pour venir enserrer l'airbag lors du montage du pavillon dans le véhicule, et est apte à pivoter dans l'autre sens lors d'un gonflage de l'airbag, pour venir recouvrir l'espace qu'occupait la garniture de pavillon chassée par le déploiement de l'AB qui passait entre la garniture de pied supérieure et la rampe support.

Le volet se déplace en effectuant une rotation vers le haut, lors de la poussée du pavillon pour venir enserrer l'airbag par en-dessous. Il peut ainsi servir de maintien à l'airbag dans le véhicule, lorsque ledit airbag n'est pas activé.

De façon préférentielle, le volet comprend au moins une patte de fixation coudée, l'étape de fixation du volet sur la rampe support étant réalisée au moyen d'une introduction de ladite patte dans un trou de la rampe support. Pour ce mode de réalisation, le volet tient préférentiellement par gravité sur la rampe support avant que le pavillon ne soit monté dans le véhicule. De façon préférentielle, chaque patte comprend deux tronçons inclinés l'un par rapport à l'autre, faisant avantageusement des coudes présentant un angle compris entre 30 et 50° entre eux. Ces deux coudes, une fois que la patte de fixation a été embecquetée dans les trous d'accueils de la rampe support, créent un S de blocage par gravité des volets.

Préférentiellement, lors de l'étape de pivotement provoqué par le pavillon, le volet passe d'une position initiale pour laquelle il est accroché à la pièce support par gravité et déborde de ladite pièce support vers l'intérieur du véhicule, à une position d'enserrement de l'airbag pour laquelle il a pivoté vers le haut lors d'une poussée du pavillon sur la partie émergeante du volet par rapport à la pièce support. En effet, avec une telle configuration d'implantation du volet sur la pièce support, le pavillon va d'abord rencontrer le volet, puis le faire pivoter relativement à la pièce support lors de la pénétration progressive dudit pavillon dans ledit véhicule.

De façon avantageuse, deux volets sont fixés à la pièce support, une poussée du pavillon entrainant une rotation simultanée et de même amplitude des deux volets. De façon avantageuse, la pièce support s'étend selon une direction longitudinale du véhicule et les deux volets sont placés au niveau des deux extrémités de ladite pièce support, considérées selon un axe longitudinal de ladite pièce support.

Un procédé de déploiement d'un airbag monté dans un véhicule selon un procédé conforme à l'invention, ledit déploiement se produisant lors d'un choc du véhicule avec un obstacle extérieur, suit ainsi les étapes suivantes :
- Une étape de gonflage de l'airbag provoqué par un capteur embarqué et apte à détecter un choc accidentel du véhicule contre un obstacle extérieur,
- Une étape de pivotement vers le bas du volet sous l'effet dudit gonflement, de manière à ce que ledit volet vienne recouvrir un bord supérieur de la garniture de pied de carrosserie,
- Une étape de déploiement complet de l'airbag sur le volet servant de piste.

Plus précisément, le volet vient recouvrir une zone située entre la rampe support et le bord supérieur de la garniture de pied, dans laquelle l'airbag est susceptible de venir se bloquer lors de son déploiement.

L'invention a pour autre objet un véhicule comprenant au moins un airbag rideau solidarisé à une rampe longitudinale d'une zone latérale et intérieure d'un habitacle dudit véhicule, ledit airbag étant placé au droit d'un pied de carroserie, selon la revendication 7.

Selon l'invention, le véhicule comprend une rampe support fixée sur la structure du véhicule et dotée d'au moins un volet mobile en rotation, ledit volet mobile enserrant par en-dessous l'airbag et étant apte à se déployer sous l'effet d'un gonflage de l'airbag pour venir recouvrir une zone située entre le bord d'une face de déviation de l'AB de la rampe et la garniture de pied supérieure, et ainsi favoriser le déploiement de l'airbag. De cette manière, le volet sert de prolongateur de la piste de déploiement pour l'airbag lors d'un gonflage dudit airbag provoqué par un choc du véhicule contre un obstacle extérieur. Autrement dit, le volet d'abord se rétracte par une rotation dans un sens pour venir enserrer l'airbag, puis se déploie par une rotation en sens inverse lors d'un choc accidentel du véhicule, pour favoriser le déploiement de l'airbag.

Avantageusement, la rampe support comprend deux volets placés aux extrémités de la rampe support, considérées selon un axe longitudinal de ladite pièce, lesdits deux volets enserrant l'airbag par en-dessous, et étant aptes à pivoter simultanément dans l'autre sens avec la même amplitude, lors d'un gonflage dudit airbag. La présence de deux volets permet d'augmenter les dimensions de la piste de déploiement de l'airbag lors d'un choc accidentel du véhicule. Tout aussi avantageusement un grand volet pourrait être préféré. La longueur du ou des volets étant choisi suivant la longueur de la zone où il faut renforcer la protection.

De façon préférentielle, ledit au moins un volet présente deux pattes de fixation faisant chacune un coude, la rampe support comprenant au moins une paire de deux trous dans lesquels sont insérées les deux pattes, pour permettre audit au moins un volet de se maintenir dans la rampe support par gravité. Autrement dit, le volet se maintient sur rampe pièce support en étant bloqué en rotation par les pattes de fixation, avant que le pavillon ne soit monté. Lors de la phase finale de montage du pavillon dans le véhicule, il se déplace du bas vers le haut. Pendant ce mouvement, le pavillon (-soulève le ou les volets qui dépassent de la rampe support et provoque la rotation des volets autour des pattes insérées dans les trous de la rampe support.

Un procédé de montage selon l'invention présente l'avantage de permettre à un airbag rideau d'être monté de façon optimisée, en assurant un déploiement sûr et complet dudit airbag dans le cas d'un choc accidentel du véhicule contre un obstacle extérieur. Il a de plus l'avantage de mettre en œuvre des pièces peu encombrantes, qui sont compatibles avec les espaces restreints, laissés vacants dans l'habitacle d'un véhicule. Il présente enfin l'avantage de ne pas alourdir le véhicule, car la pièce support et les volets sont fabriqués en matériau léger par rapport à un métal.

On donne ci-après, une description détaillée d'un mode de réalisation préféré d'un procédé de montage d'un airbag rideau selon l'invention, en se référant aux figures suivantes :
- La figure 1 est une vue en perspective d'un habitacle d'un véhicule selon l'invention, montrant l'emplacement d'un airbag rideau,
- La figure 2 est une vue en perspective d'un premier mode de réalisation d'une pièce support d'un véhicule selon l'invention,
- La figure 3 est une vue en perspective d'un deuxième mode de réalisation d'une pièce support d'un véhicule selon l'invention,
- Les figures 4A et 4B sont deux figures en perspective, respectivement du dessus et du dessous d'un volet d'une pièce support d'un véhicule selon l'invention,
- La figure 5 est une vue agrandie en perspective d'une patte du volet des figures 4A et 4B,
- La figure 6 est une vue en perspective d'une pièce support et d'un volet d'un véhicule selon l'invention, montrant ledit volet dans deux positions différentes,
- Les figures 7A et 7B sont deux vues en coupe d'une pièce support et d'un volet mobile d'un véhicule selon l'invention, respectivement avant et après le montage d'un pavillon dans le véhicule,
- La figure 8 est une vue en coupe d'une pièce support dotée d'un volet, d'un airbag et d'un pavillon d'un véhicule selon l'invention.

Un habitacle d'un véhicule 1 selon l'invention comprend une structure 2 longitudinale supérieure et une garniture pied milieu 3 s'étendant selon une direction sensiblement perpendiculaire à la structure 2 formant le brancard. Un airbag 4 rideau est fixée à la structure 2 en étant placé au-dessus et au droit du pied milieu 3. Dans le cas d'un choc accidentel du véhicule contre un obstacle extérieur, pouvant par exemple être un autre véhicule, un capteur de choc transmet un signal à l'airbag 4. Un générateur de gaz de l'airbag 4 est aussitôt activé, pour gonfler ledit airbag 4. Une fois déployé, l'airbag 4 constitue un bourrelet latéral amortissant, s'étendant selon une direction longitudinale du véhicule, et apte à s'interposer entre un occupant dudit véhicule 1 et une portière de celui-ci, pour empêcher tout choc direct entre cet occupant et ladite portière. Généralement, le véhicule 1 comprend deux structures parallèles 2 et dispose donc de deux airbags 4 rideaux, situés chacun sur un côté de l'habitacle dudit véhicule 1 au-dessus de la garniture de pied milieu 3.

Il est donc fondamental que cet airbag puisse se déployer de façon sûre et fiable pour pouvoir préserver l'intégrité physique des occupants de ce véhicule, dans le cas d'un choc accidentel du véhicule contre un obstacle extérieur.

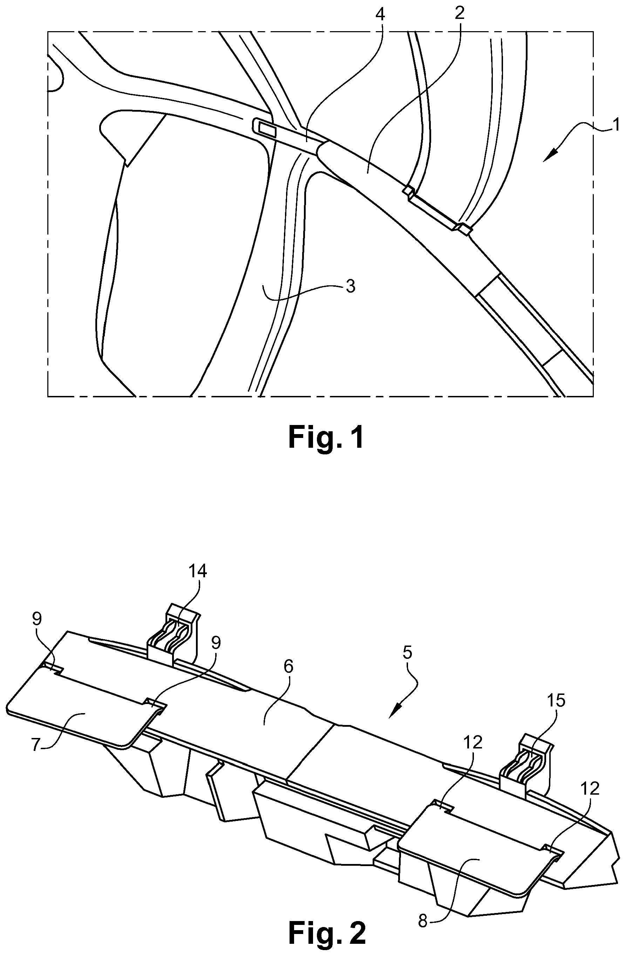

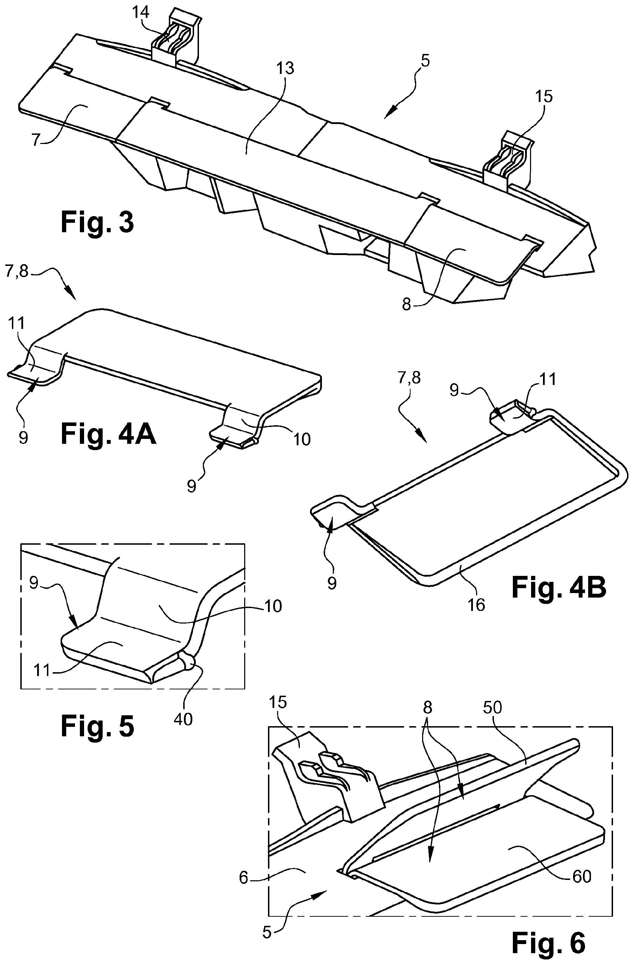

A cette fin, en se référant aux figures 2 et 3, une rampe support 5 allongée est fixée à la structure 2, au droit du pied milieu 3. Cette rampe support 5 est fixée à la structure 2, de manière à s'étendre le long d'un axe longitudinal du véhicule 1.

En se référant à la figure 2, selon un premier mode de réalisation préféré d'un véhicule selon l'invention, la rampe support 5 présente une face supérieure 6 sensiblement plane servant à dévier la trajectoire du sac d'airbag 4 lors de son gonflement et ainsi à éviter le bord supérieur de l'ébénisterie haute située juste en-dessous. Deux volets 7, 8 sont fixés dans la face 6 de déviation. Ces deux volets 7, 8 sont placés au niveau des deux extrémités de la rampe support 5, considérées suivant un axe longitudinal de ladite pièce 5,

En se référant aux figures 4A et 4B, les volets 7, 8 d'extrémité sont plans et ont une forme rectangulaire. Leur épaisseur n'excède pas 5mm et est préférentiellement comprise entre 1mm et 2mm.

En se référant aux figures 4A, 4B et 5, les volets 7, 8 sont chacun dotés de deux pattes de fixation 9 identiques placées aux deux extrémités d'un grand côté du rectangle. Chaque patte 9 présente un premier segment plan 10 prolongé par un deuxième segment plan 11, lesdits deux segments 10, 11 faisant entre eux un angle supérieur à 90°. Les pattes 9 de fixation sont implantées dans le volet 7, 8, de sorte que le premier segment 10 soit placé entre le volet 7, 8 et le deuxième segment plan 11, et de sorte que ledit deuxième segment 11 s'étende parallèlement au plan du volet 7, 8. Chaque patte 9 est dotée d'un clip latéral 40 placé sur le deuxième segment 11. Chaque volet 7, 8 peut être doté sur son pourtour d'une ligne de renfort 16 pour diminuer le risque d'accroche dans les coins opposés aux pattes de fixation 9 et pour améliorer la rhéologie.

En se référant à la figure 2, la rampe support 5 possède deux paires de trous 12 disposées chacune à une extrémité de ladite pièce support 5, une paire de trous 12 servant à fixer un volet 7, 8 d'extrémité. En effet, les deux pattes de fixation 9 d'un volet 7, 8 d'extrémité sont introduites dans une paire de trous 12 située à une extrémité de la pièce support 5.

En se référant à la figure 3, selon un deuxième mode de réalisation préféré d'un véhicule selon l'invention, les volets 7 et 8 sont reliés entre eux par le segment 13, formant ainsi un seul grand volet couvrant toute la longueur de la rampe support 5.

Le grand volet 7, 8, 13 est préférentiellement réalisé en matière plastique souple, comme par exemple du polypropylène PP naturel ou chargé EPDM (éthylène-propylène-diène monomère).

En se référant à la figure 6, chaque volet 7, 8, 13 une fois qu'ils ont été montés dans la rampe support 5 au moyen d'une introduction des pattes de fixation 9 dans les trous 12, peuvent pivoter autour desdites pattes 9 entre diverses positions 50, 60. Les deux volets 8 apparaissant sur la figure 6 matérialise un seul et même volet 8, mais dans deux positions différentes. Il est à noter que lorsque la pièce support 5 est dotée d'un grand volet, 7, 8, 13, lesdits trois volets 7, 8, 13 sont montés pivotant sur ladite rampe support 5, par un axe de rotation passant par toutes les pattes 9 introduites dans des logements 12.

La rampe support 5 comprend deux points de fixation 14, 15 à la structure 2 de l'habitacle du véhicule 1.

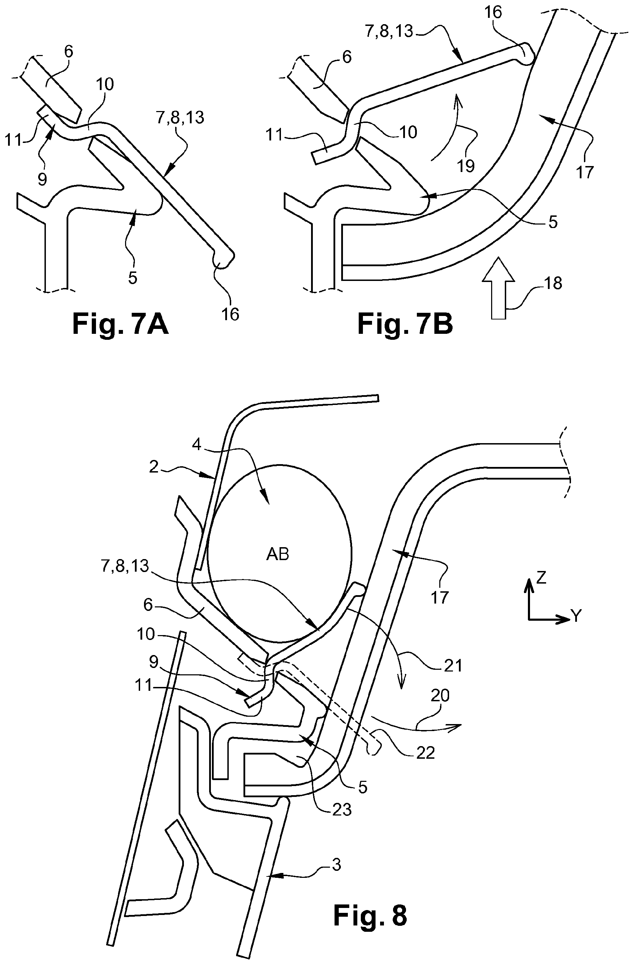

En se référant à la figure 7A, une fois que la pièce support a été fixée à la structure 2, la face supérieure 6 de celle-ci se retrouve inclinée vers le bas par rapport à une position horizontale, et chaque volet 7, 8, 13 tient sur la pièce support 5 par gravité, grâce à la forme particulière des pattes de fixation 9 qui sont insérées dans les trous 12 de ladite rampe support 5. Chaque volet 7 et 8 ou 7, 8, 13 s'étend sur la face supérieure 6 de la rampe support 5 en étant parallèle à ladite face supérieure 6 et en débordant de celle-ci vers l'intérieur de l'habitacle du véhicule 1.

Un procédé de montage d'un airbag rideau 4 dans un véhicule suit les étapes suivantes :
- Une étape d'introduction d'au moins un volet 7, 8, 13 sur la rampe support 5.
- Une étape de fixation de la rampe support 5 sur une peau extérieure du véhicule matérialisant la structure 2 longitudinale supérieure, la face supérieure 6 de ladite rampe support 5 se retrouvant inclinée vers le bas par rapport à un plan horizontal. Pour cette configuration, les volets 7, 8, 13 tiennent dans la rampe support 5 par gravité, grâce à la conformation particulière des pattes de fixation 9,
- Une étape d'insertion de l'airbag 4 replié, au-dessus de la rampe support 5,
- Une étape de montage d'un pavillon 17 se traduisant par un déplacement dudit pavillon 17 dans le sens indiqué par la flèche 18 de la figure 7B. Puisque les volets 7, 8, 13 débordent de la pièce support 5, le pavillon 17 en cours de déplacement lors de son montage, va provoquer une mise en rotation vers le haut desdits volets 7, 8, 13 dans le sens indiqué par la flèche 19 de la figure 7B. Lesdits volets 7, 8, 13 enserrent alors l'airbag 4 par en-dessous. Le terme « enserrer » signifie que les volets viennent au contact de l'airbag en exerçant une légère poussée sur celui-ci. Les volets 7, 8, 13 étant de préférence dans des matières souples et en faible épaisseur, leur déformation est possible dans leur limite élastique. Cela leur permet de s'adapter à l'espace restant entre le sac AB replié et la garniture de pavillon sans rajouter de contraintes au montage du pavillon ou des ébénisteries qui viendront après,
- Une étape de montage de la garniture de pied milieu 3.

La figure 8 illustre l'état habituel du véhicule lorsque la rampe support 5, l'airbag 4, la garniture de pied milieu 3 et le pavillon 17 sont montés à leur emplacement définitif.

Lorsque survient un choc latéral accidentel du véhicule contre un obstacle extérieur pouvant par exemple être un autre véhicule, un capteur transmet instantanément un signal électrique à l'airbag 4, activant le dispositif de gonflage dudit airbag 4. Sous l'effet conjugué du choc latéral du véhicule et du gonflage de l'airbag 4, le pavillon 17 se déplace vers l'intérieur de l'habitacle dans le sens indiqué par la flèche 20 de la figure 8, et les volets 7, 8, 13 pivotent vers le bas dans le sens indiqué par la flèche 21 de la figure 8, qui est un sens opposé à celui suivant lequel le pavillon 17 avait fait pivoter lesdits volets 7, 8, 13 lors de son montage dans le véhicule. De cette manière, après ce pivotement en sens inverse, les volets 7, 8, 13 se retrouvent dans la position illustrée par le contour 22 en pointillés, pour laquelle ils recouvrent une ouverture 23 située entre la rampe support 5 et la garniture de pied milieu 3. Ces volets 7, 8, 13 agissent alors comme des pistes lisses de déploiement dans le prolongement de la face de déviation 6, favorisant le gonflage de l'airbag 4 en empêchant celui-ci de venir se bloquer dans ladite ouverture 23 qui peut s'agrandir vers l'intérieur du véhicule à cause des fortes pressions exercées par l'AB 4 et aux déformations des pièces environnantes qui y sont soumises lors du gonflage du sac AB. Notamment par un déplacement vers l'intérieur du véhicule, la garniture de pied milieu 3 est entrainée par le mouvement 20 du pavillon 17.

Pour résumer, lorsque le véhicule est en cours de montage, les volets 7, 8, 13 de la pièce support 5 pivotent vers le haut sous l'effet d'une poussée du pavillon 17 qui est inséré dans ledit véhicule. Lors d'un éventuel choc latéral accidentel du véhicule, les volets 7, 8, 13 vont pivoter dans l'autre sens, en l'occurrence vers le bas, pour lisser la surface sur laquelle va se déployer l'airbag 4 en cours de gonflage, et l'empêcher ainsi de venir se coincer dans une ouverture 23 située entre la rampe support 5 et la garniture de pied milieu 3.

## Revendications

1. Procédé de montage d'un airbag rideau (4) sur une structure (2) d'une zone latérale et intérieure d'un véhicule (1), ledit airbag (4) étant destiné à être placé au-dessus et au droit d'un pied (3) de carrosserie dudit véhicule (1), **caractérisé en ce qu'**il comprend les étapes suivantes,
- Une étape de fixation d'au moins un volet mobile (7, 8, 13) pivotant sur une rampe support (5) de sorte que ledit volet (7, 8, 13) s'étende parallèlement à une face (6) de déviation de ladite rampe (5),
- Une étape de fixation de la rampe support (5) équipée dudit au moins un volet (7, 8, 13) sur la structure (2) du véhicule,
- Une étape de positionnement de l'airbag (4) au-dessus de ladite rampe (5) et dudit au moins un volet (7, 8, 13),
- Une étape de montage d'un pavillon (17) dans le véhicule (1),
- Une étape de déplacement du volet (7, 8, 13) relativement à la rampe support (5) sous l'effet d'une poussée du pavillon (17) réalisée lors de son montage, de manière à ce que le volet (7, 8, 13) se déplace pivotant vers le haut
pour venir enserrer ledit airbag (4) dans une position fixe, et de manière à ce que, sous l'effet d'un gonflement de l'airbag (4) lors d'un choc du véhicule, ledit volet se déplace pivotant vers le bas
pour venir recouvrir une zone située entre le bord de la face de déviation (6) de la rampe support (5) et la garniture de pied (3) supérieure, et ainsi faciliter le déploiement dudit airbag (4).

2. Procédé de montage selon la revendication 1, **caractérisé en ce que** l'étape de fixation du volet (7, 8, 13) sur la rampe support (5) est réalisée de façon articulée de manière à permettre audit volet (7, 8, 13) de se déplacer par pivotement.

3. Procédé de montage selon la revendication 2, **caractérisé en ce que** le volet (7, 8, 13) se déplace en effectuant une rotation vers le haut, lors de la poussée du pavillon (17) pour venir enserrer l'airbag par en-dessous.

4. Procédé de montage selon l'une quelconque des revendications 2 ou 3, **caractérisé en ce que** le volet (7, 8, 13) comprend au moins une patte de fixation (9) coudée, et **en ce que** l'étape de fixation du volet (7, 8, 13) sur la rampe support (5) est réalisée au moyen d'une introduction de ladite patte (9) dans un trou (13) de la rampe support (5).

5. Procédé de montage selon l'une quelconque des revendications 2 à 4, **caractérisé en ce que** lors de l'étape de pivotement provoqué par le pavillon (17), le volet (7, 8, 13) passe d'une position initiale pour laquelle il est accroché à la rampe support (5) par gravité et déborde de ladite rampe support (5) vers l'intérieur du véhicule (1), à une position d'enserrement pour laquelle il a pivoté vers le haut lors d'une poussée du pavillon (17) sur la partie émergeante du volet (7, 8, 13) par rapport à la rampe support (5).

6. Procédé de montage selon l'une quelconque des revendications 2 à 5, **caractérisé en ce que** deux volets (7, 8) sont fixés à la rampe support (5), et **en ce qu'**une poussée du pavillon (17) entraine une rotation simultanée et de même amplitude des deux volets (7, 8).

7. Véhicule (1) comprenant au moins un airbag rideau (4) solidarisé à une structure (2) longitudinale d'une zone latérale et intérieure d'un habitacle dudit véhicule (1), ledit airbag (4) étant placé au-dessus et au droit d'un pied (3) de carrosserie, **caractérisé en ce qu'**il comprend une rampe support (5) fixée sur la structure (2) du véhicule et dotée d'au moins un volet mobile (7, 8, 13) en rotation pivotant , et **en ce que** ledit volet mobile (7, 8, 13) enserre par en-dessous l'airbag (4), en se déplaçant pivotant vers le haut sous l'effet du montage d'un pavillon (17), ledit volet (7, 8, 13) étant apte à se déployer pivotant vers le bas sous l'effet d'un gonflage de l'airbag (4) pour venir recouvrir une zone située entre le bord d'une face de déviation (6) de l'airbag (4) de la rampe support (5) et la garniture de pied (3) supérieure, et ainsi favoriser le déploiement de l'airbag (4).

8. Véhicule selon la revendication 7, **caractérisé en ce que** la rampe support (5) comprend deux volets (7, 8) placés aux extrémités de la rampe support (5), considérées selon un axe longitudinal de ladite rampe (5), et **en ce que** lesdits deux volets (7, 8) enserrent l'airbag par en-dessous, et étant aptes à pivoter simultanément dans l'autre sens avec la même amplitude, lors d'un gonflage dudit airbag (4).

9. Véhicule selon l'une quelconque des revendications 7 ou 8, **caractérisé en ce que** ledit au moins un volet (7, 8) présente deux pattes de fixation (9) faisant chacune un coude, et **en ce que** la rampe support (5) comprend au moins une paire de deux trous (12) dans lesquels sont insérées les deux pattes (9) pour permettre audit au moins un volet (7, 8) de se maintenir dans la rampe support (5) par gravité.

## Patentansprüche

1. Verfahren zur Montage eines Vorhang-Airbags (4) an einer Struktur (2) eines seitlichen und inneren Bereichs eines Fahrzeugs (1), wobei dieser Airbag (4) dazu bestimmt ist, über und genau gegenüber einer Säule (3) der Karosserie des Fahrzeugs (1) angeordnet zu werden, **dadurch gekennzeichnet, dass** es die folgenden Schritte umfasst:
- einen Schritt der Befestigung wenigstens einer schwenkbaren beweglichen Klappe (7, 8, 13) an einer Stützrampe (5), derart, dass sich die Klappe (7, 8, 13) parallel zu einer Ablenkfläche (6) der Rampe (5) erstreckt,
- einen Schritt der Befestigung der mit der wenigstens einen Klappe (7, 8, 13) ausgestatteten Stützrampe (5) an der Struktur (2) des Fahrzeugs,
- einen Schritt der Positionierung des Airbags (4) über der Rampe (5) und der wenigstens einen Klappe (7, 8, 13),
- einen Schritt der Montage eines Karosserieoberteils (17) im Fahrzeug (1),
- einen Schritt der Verlagerung der Klappe (7, 8, 13) relativ zur Stützrampe (5) unter der Wirkung eines Schubes des Karosserieoberteils (17), der bei dessen Montage ausgeübt wird, derart, dass die Klappe (7, 8, 13) eine Schwenkbewegung nach oben ausführt, um dann den Airbag (4) in einer festen Position einzuschließen, und derart, dass die Klappe bei einem Aufprall des Fahrzeugs unter der Wirkung eines Aufblasens des Airbags (4) eine Schwenkbewegung nach unten ausführt, um dann einen Bereich zu bedecken, der sich zwischen dem Rand der Ablenkfläche (6) der Stützrampe (5) und der oberen Verkleidung der Säule (3) befindet, und somit die Entfaltung des Airbags (4) zu erleichtern.

2. Verfahren zur Montage nach Anspruch 1, **dadurch gekennzeichnet, dass** der Schritt der Befestigung der Klappe (7, 8, 13) an der Stützrampe (5) auf gelenkige Weise ausgeführt wird, um so zu ermöglichen, dass die Klappe (7, 8, 13) eine Schwenkbewegung ausführt.

3. Verfahren zur Montage nach Anspruch 2, **dadurch gekennzeichnet, dass** sich die Klappe (7, 8, 13) beim Schub des Karosserieoberteils (17) bewegt, indem sie eine Drehung nach oben ausführt, um dann den Airbag von unten einzuschließen.

4. Verfahren zur Montage nach einem der Ansprüche 2 oder 3, **dadurch gekennzeichnet, dass** die Klappe (7, 8, 13) wenigstens eine abgewinkelte Befestigungslasche (9) umfasst, und dadurch, dass der Schritt der Befestigung der Klappe (7, 8, 13) an der Stützrampe (5) mittels einer Einführung dieser Lasche (9) in ein Loch (13) der Stützrampe (5) ausgeführt wird.

5. Verfahren zur Montage nach einem der Ansprüche 2 bis 4, **dadurch gekennzeichnet, dass** im Schritt der durch das Karosserieoberteil (17) hervorgerufenen Schwenkung die Klappe (7, 8, 13) sich von einer Ausgangsposition, in welcher sie durch Schwerkraft an der Stützrampe (5) angehängt ist und über die Stützrampe (5) hinaus ins Innere des Fahrzeugs (1) ragt, in eine Einschließposition bewegt, in welcher sie bei einem auf den in Bezug auf die Stützrampe (5) herausragenden Teil der Klappe (7, 8, 13) ausgeübten Schub des Karosserieoberteils (17) nach oben geschwenkt ist.

6. Verfahren zur Montage nach einem der Ansprüche 2 bis 5, **dadurch gekennzeichnet, dass** zwei Klappen (7, 8) an der Stützrampe (5) befestigt sind, und dadurch, dass der Schub des Karosserieoberteils (17) eine gleichzeitige Drehung der zwei Klappen (7, 8) um denselben Betrag zur Folge hat.

7. Fahrzeug (1), welches wenigstens einen Vorhang-Airbag (4) umfasst, der mit einer Längsstruktur (2) eines seitlichen und inneren Bereichs des Fahrzeugs (1) fest verbunden ist, wobei dieser Airbag (4) über und genau gegenüber einer Säule (3) der Karosserie angeordnet ist, **dadurch gekennzeichnet, dass** es eine Stützrampe (5) umfasst, die an der Struktur (2) des Fahrzeugs befestigt ist und mit wenigstens einer schwenkbaren drehbeweglichen Klappe (7, 8, 13) ausgestattet ist, und dadurch, dass diese bewegliche Klappe (7, 8, 13) den Airbag (4) von unten einschließt, indem sie unter der Wirkung der Montage eines Karosserieoberteils (17) eine Schwenkbewegung nach oben ausführt, wobei die Klappe (7, 8, 13) dafür ausgelegt ist, unter der Wirkung eines Aufblasens des Airbags (4) durch Schwenken nach unten aufzuklappen, um dann einen Bereich zu bedecken, der sich zwischen dem Rand einer Fläche (6) der Stützrampe (5) zur Ablenkung des Airbags (4) und der oberen Verkleidung der Säule (3) befindet, und somit die Entfaltung des Airbags (4) zu erleichtern.

8. Fahrzeug nach Anspruch 7, **dadurch gekennzeichnet, dass** die Stützrampe (5) zwei Klappen (7, 8) umfasst, die, entlang einer Längsachse der Rampe (5) gesehen, an den Enden der Stützrampe (5) angeordnet sind, und dadurch, dass die zwei Klappen (7, 8) den Airbag von unten einschließen und dafür ausgelegt sind, bei einem Aufblasen des Airbags (4) gleichzeitig um denselben Betrag in die andere Richtung zu schwenken.

9. Fahrzeug nach einem der Ansprüche 7 oder 8, **dadurch gekennzeichnet, dass** die wenigstens eine Klappe (7, 8) zwei Befestigungslaschen (9) aufweist, die jeweils abgewinkelt sind, und dadurch, dass die Stützrampe (5) wenigstens ein Paar von zwei Löchern (12) umfasst, in welche die zwei Laschen (9) eingesetzt sind, um zu ermöglichen, dass die wenigstens eine Klappe (7, 8) durch Schwerkraft in der Stützrampe (5) gehalten wird.

## Claims

1. Method for mounting a curtain airbag (4) on a structure (2) of a lateral and interior zone of a vehicle (1), said airbag (4) being intended to be positioned above and in line with a bodywork pillar (3) of said vehicle (1), **characterized in that** it comprises the following steps,
- a step of fixing a pivotably mobile flap (7, 8, 13) to a ramped support rail (5) so that said flap (7, 8, 13) extends parallel to a deflection face (6) of said ramp rail (5),
- a step of fixing the ramped support rail (5) equipped with said at least one flap (7, 8, 13) to the structure (2) of the vehicle,
- a step of positioning the airbag (4) above said ramp rail (5) and above said at least one flap (7, 8, 13),
- a step of mounting a roof panel (17) in the vehicle (1),
- a step of moving the flap (7, 8, 13) relative to the ramped support rail (5) under the effect of the pressure applied by the roof panel (17) as it is being mounted, so that the flap (7, 8, 13) moves in pivoting upwards to trap said airbag (4) in a fixed position and so that, under the effect of the inflating of the airbag (4) if the vehicle is involved in a collision, said flap moves in pivoting downwards to uncover a zone situated between the edge of the deflection face (6) of the ramped support rail (5) and the upper lining of the pillar (3), thus facilitating the deployment of said airbag (4).

2. Method of mounting according to Claim 1, **characterized in that** the step of fixing the flap (7, 8, 13) to the ramped support rail (5) is performed in an articulated fashion so as to allow said flap (7, 8, 13) to move in pivoting.

3. Method of mounting according to Claim 2, **characterized in that** the flap (7, 8, 13) moves by rotating upwards, under the pressure of the roof panel (17), to trap the airbag from beneath.

4. Method of mounting according to either one of Claims 2 and 3, **characterized in that** the flap (7, 8, 13) comprises at least one cranked fixing tab (9), and **in that** the step of fixing the flap (7, 8, 13) to the ramped support rail (5) is performed by introducing said tab (9) into a hole (13) in the ramped support rail (5).

5. Method of mounting according to any one of Claims 2 to 4, **characterized in that** during the step of pivoting brought about by the roof panel (17), the flap (7, 8, 13) moves from an initial position in which it is caught on the ramped support rail (5) under the effect of gravity and protrudes from said ramped support rail (5) towards the interior of the vehicle (1), into a trapping position in which it has pivoted upwards under the pressure of the roof panel (17) on the emergent part of the flap (7, 8, 13) with respect to the ramped support rail (5).

6. Method of mounting according to any one of Claims 2 to 5, **characterized in that** two flaps (7, 8) are fixed to the ramped support rail (5), and **in that** the pressure of the roof panel (17) causes the two flaps (7, 8) to rotate simultaneously with the same amplitude of rotation.

7. Vehicle (1) comprising at least one curtain airbag (4) secured to a longitudinal structure (2) of a lateral and interior zone of a cabin of said vehicle (1), said airbag (4) being positioned above and in line with a bodywork pillar (3), **characterized in that** it comprises a ramped support rail (5) fixed to the structure (2) of the vehicle and provided with at least one mobile flap (7, 8, 13) able to move in pivoting rotation, and **in that** said mobile flap (7, 8, 13) traps the airbag (4) from beneath, by moving in pivoting upwards under the effect of the mounting of a roof panel (17), said flap (7, 8, 13) being able to deploy in pivoting downwards under the effect of the inflating of the airbag (4) in order to cover a zone situated between the edge of an airbag-deflection face (6) of the ramped support rail (5) deflecting the airbag (4) and the upper lining of the pillar (3) and thus encourage the deployment of the airbag (4).

8. Vehicle according to Claim 7, **characterized in that** the ramped support rail (5) comprises two flaps (7, 8) placed at the ends of the ramped support rail (5), when considered along a longitudinal axis of said ramped rail (5), and **in that** said two flaps (7, 8) trap the airbag from beneath, and are able to pivot simultaneously in the other direction, with the same amplitude, upon inflation of said airbag (4).

9. Vehicle according to either one of Claims 7 and 8, **characterized in that** said at least one flap (7, 8) has two fixing tabs (9), each cranked, and **in that** the ramped support rail (5) comprises at least one pair of two holes (12) into which the two tabs (9) are inserted so as to allow said at least one flap (7, 8) to be held in the ramped support rail (5) under the effect of gravity.
